# EUROPÄISCHE PATENTSCHRIFT

(11) **EP 1 422 546 B1**
(45) Veröffentlichungstag und Bekanntmachung des Hinweises auf die Patenterteilung: **12.07.2006**
(21) Anmeldenummer: 02026387.7
(22) Anmeldetag: 25.11.2002
(51) Int. Cl.: G03B 21/40

(54) **Vorrichtung und Verfahren zur Grossbildprojektion**
Method and apparatus for large screen projection
Méthode et dispositif pour projection à grand écran

(43) Veröffentlichungstag der Anmeldung: 26.05.2004
(73) Patentinhaber: KINOTON GmbH, D-82110 Germering (DE)
(72) Erfinder: Dobler, Christoph, 82229 Seefeld (DE)
(74) Vertreter: Rupprecht, Kay

(56) Entgegenhaltungen:
- DE-A- 3 804 732
- DE-A- 19 518 068
- DE-A- 19 654 377
- DE-A- 19 829 138
- US-A- 4 157 570
- US-A- 5 634 704
- US-A- 5 902 033
- US-A- 6 139 156
- US-B1- 6 296 359
- US-B1- 6 343 862
- FRIEL G J ET AL: "Q-SWITCHING OF A DIODE-PUMPED ND:YVO4 LASER USING A QUADRUPOLE ELECTRO-OPTIC DEFLECTOR" APPLIED PHYSICS B: LASERS AND OPTICS, SPRINGER INTERNATIONAL, BERLIN, DE, Bd. B67, Nr. 2, 1. August 1998 (1998-08-01), Seiten 267-270, XP000771637 ISSN: 0946-2171

## Beschreibung

Die vorliegende Erfindung betrifft eine Vorrichtung zur großflächigen Projektion von Filmbildern auf eine Bildwand, gemäß dem Oberbegriff des Anspruchs 1, wie sie beispielsweise aus der DE 19 654 377 A1 bekannt ist. Die Erfindung betrifft ferner ein Verfahren zur großflächigen Projektion von Filmbildern auf eine Bildwand mittels einer Vorrichtung zur großflächigen Projektion der zuvor genannten Art.

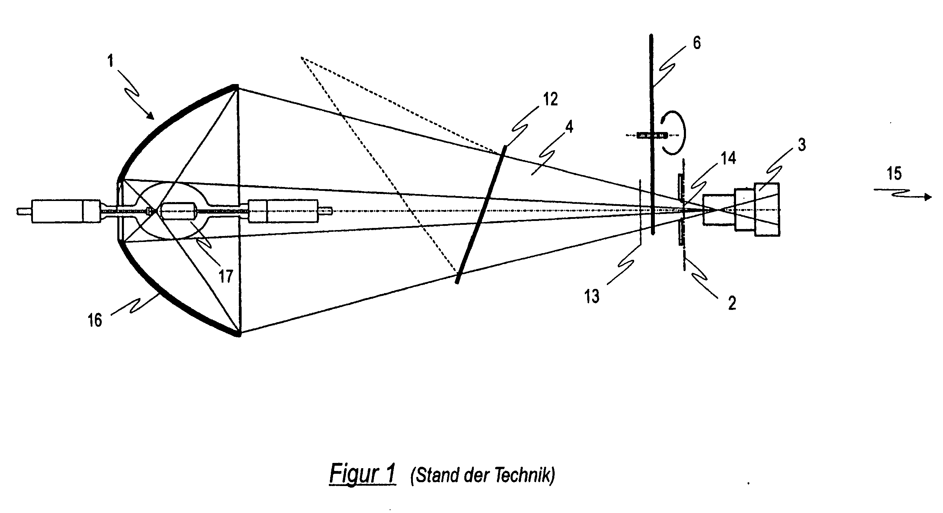

Eine solche Vorrichtung ist im Grunde nach aus der Filmvorführtechnik bekannt. In Figur 1 ist zur Erläuterung ein Beispiel einer derartigen, aus dem Stand der Technik bekannten Vorrichtung gezeigt. Hierbei dirigiert die Projektionslampe einen Lichtkegel durch die Bildprojektionsebene und durch das Objektiv, um ein in der Projektionsebene angeordnetes Filmbild bzw. Dia auf die Bildwand großflächig zu projizieren. Das Kernstück einer solchen Vorrichtung ist die Projektionslampe. Diese ist in der Regel eine Xenonhochdrucklampe um einer hohen Lichtausbeute und möglichst guten Farbwiedergabeeigenschaft Sorge zu tragen. Die Projektionslampe weist bekannterweise neben einem Glaskolben auch einen schalenförmigen Reflektor auf, in welchem der Glaskolben, nach dessen optischen Achse ausgerichtet, teilweise über den oberen Rand der Reflektorschale hinausragend aufgenommen ist. Der Reflektor reflektiert das vom Lichtbogen der Xenonlampe abgestrahlte Licht in einen (runden) Lichtkegel. In vorteilhafter Weise ist die Projektionslampe derart angeordnet, dass der Lichtkegel durch die im Querschnitt rechteckige Bildprojektionsebene und durch das Objektiv läuft. Letzteres ist ein Projektionsobjektiv, welches auf die Großbildtechnik optimiert und deshalb mit einem Objektiv für gewöhnliche Videoprojektion nicht vergleichbar ist. Die Bildprojektionsebene weist einen rechteckigen, an die Geometrie des Filmbildes angepassten Querschnitt auf. Demgemäss wird bei den bekannten Projektoren aus dem ursprünglichen, im Querschnitt kreisförmigen Lichtkegel letztendlich also nur ein im Querschnitt rechteckiger Pyramidenstumpf zur eigentlichen Projektion des Filmbildes auf die Leinwand genutzt. Der rechteckige Pyramidenstumpf liegt dabei innerhalb des kreisförmigen Lichtkegels, so dass das außerhalb dieser Schnittmenge liegende Licht abgeblockt werden muß und keinen Beitrag bezüglich der Intensität auf der Bildwand liefern kann.

Dieser aus dem Stand der Technik bekannte Aufbau der Projektionslampe weist in der Regel eine genau definierte geometrische Konfiguration auf, um eine möglichst große Lichtausbeute zu erreichen. Als Beispiel hierfür sei der Abstand des Lichtbogens vom Reflektor genannt. Ein wesentlicher Parameter, welcher diese Konfiguration bestimmt, ist dabei die Temperaturbelastbarkeit. Bei einer derartigen Konfiguration treten verschiedene optische Effekte auf, wie etwa Astigmatismus, Bildfeldwölbung, Vignittierung (Abdunklung der Ecken) oder Verzeichnung (Distorsion), welche die Qualität der auf die Bildwand projizierten Bilder mindern. Die optischen Effekte haben insbesondere zur Folge, dass Verzerrungen und Intensitätsverluste bzw. Intensitätsinhomogenitäten bei den projizierten Bildern auftreten. Die ursprüngliche Ursache derartiger Abbildungsfehler liegt darin, dass die eigentliche Lichtquelle, nämlich der Lichtbogen zwischen den Elektroden in der Hochdrucklampe, nicht punktförmig ist (Idealfall), sondern eine räumliche Ausdehnung aufweist. Derartige Abbildungsfehler werden zur Zeit durch eine geeignete Auslegung des Objektivs vermindert, eine vollständige Eliminierung dieser ist jedoch nicht möglich.

Ein bedeutender Abbildungsfehler bei den aus dem Stand der Technik bekannten Projektionslampen besteht darin, dass im Kern des vom Reflektor geformten Lichtkegels grundsätzlich ein Minimum in der Intensitätsverteilung auftritt. Dies liegt daran, dass ein Teil des Lichtes durch die Elektroden der Hochdrucklampe abgeschirmt wird, da diese in Richtung der optischen Achse des Reflektors angeordnet sind. Dadurch tritt im Kern des Lichtkegels ein Intensitätsminimum auf, welches sich letztendlich auch in den projizierten Bildern als dunkler Fleck in der Mitte der Bildwand bemerkbar macht. Dieser Effekt wird zur Zeit dadurch reduziert, dass bewusst die Bildschärfe herabgesetzt wird, wodurch ein Verwischen der Intensitätsinhomogenität auftritt. Dadurch kann auf Kosten der Bildschärfe eine homogen Ausleuchtung des Bildes erreicht werden.

Aufgrund der räumlich ausgedehnten Lichtquelle treten jedoch noch zusätzliche Effekte auf, die zusammengefasst unter dem Begriff "Blendenziehen" bei der Filmvorführtechnik bekannt sind. Hierunter ist ein Synchronisationsschlupf beim Durchschneiden des Lichtkegels zu verstehen, der sich in einem "Verwischen" der Bildfolge auf der Projektionsebene äußert und durch den Querschnitt des Lichtkegels wesentlich bestimmt wird.

Neben der Projektionslampe spielt bei einer Vorrichtung zur Filmprojektion die Synchronisation der Belichtungsphasen des Bildes mit der Bildfolgefrequenz des Filmes eine entscheidende Rolle. Diese Synchronisation erfolgt bekannterweise mittels einer Umlauf- bzw. Flügelblende, die zum Teil verspiegelt und zum Teil lichtdurchlässig und in der Projektionsvorrichtung vor der Bildprojektionsebene angeordnet ist. Die Umlaufblende ist eine rotierende Blende, die den Film während des Transports abdeckt und eine Beleuchtung des Filmbildes in der Bildprojektionsebene durch den offenen Teil der Umlaufblende zu den anderen Zeiten gestattet. Man spricht in diesem Zusammenhang auch vom Hellsektor, der in der Regel 180° (bei einer Zweiflügelblende) oder 172° (bei einer Dreiflügelblende) beträgt. Nur durch eine genaue Justage der Umlaufblende in dem optischen Strahlengang der Vorrichtung zur Großbildprojektion kann erreicht werden, dass Störungen durch waagerechte Begrenzungen der einzelnen Filmbilder unterdrückt werden. Derartige Störeffekte entstehen, wenn schnell aufeinanderfolgende periodische Veränderungen der Bildhelligkeiten auftreten, die das Auge aufgrund seiner Trägheit noch voneinander unterscheiden kann. Diese als Flimmern oder Flickern bezeichneten Effekte können zu einem stroboskopischen Effekt führen.

Ein Nachteil bei der aus dem Stand der Technik bekannten Anordnung der rotierenden Umlaufblende in dem Lichtkegel vor der Bildprojektionsebene liegt des weiteren darin, dass die Umlaufblende relativ groß ausgelegt werden muß, um in dem Lichtkegel das gesamte Licht hinreichend abzuschirmen. Aufgrund der räumlichen Ausdehnung der rotierenden Blendenflügel vollzieht sich der Prozess des Abdeckens des Lichtkegels durch die jeweiligen Blendenflügel in einer relativ langen Zeit, so dass dadurch eine Leistungsschwächung in dem zur Beleuchtung der Filmbilder verwendeten Licht auftritt. Dadurch wird letztendlich die Lichtleistung des Systems auf der Bildwand nochmals reduziert.

Aus dem Dokument US 5,902,033 A ist eine Projektor-Vorrichtung bekannt. Jene Vorrichtung weist eine Lichtquelle auf, die Licht durch ein als Bildprojektionsebene dienendes LCD-Panel und ein Objektiv auf eine Bildwand projiziert. Des weiteren ist in dem Strahlengang des von der Lichtquelle emittierten Lichtes zwischen dieser und der Bildprojektionsebene ein Lichtleiter angeordnet, in welchen das Licht eingekoppelt und an dessen Ende wieder ausgekoppelt wird. Allerdings ist die aus dem Stand der Technik bekannte Vorrichtung nur dahingehend ausgelegt, Standbilder, wie etwa LCD-Anzeigen oder Dias, auszuleuchten bzw. auf die Bildwand zu projizieren, da die Vorrichtung keine Shutter-Vorrichtung zum mit der Bildfolgesequenz synchronisierten Unterbrechen des Strahlenganges des von der Lichtquelle emittierten Lichts aufweist. Eine Anwendung der Vorrichtung als Kinoprojektor zum Projizieren von bewegten Bildern ist somit nicht ohne weiteres möglich.

Aus dem Dokument DE 195 18 068 A ist eine Kinoprojektor-Vorrichtung bekannt, welche neben einer Lichtquelle, die Licht durch eine Projektionsebene und ein Objektiv auf eine Bildwand projiziert, auch eine Shutter-Vorrichtung aufweist, mit welcher der Strahlengang des von der Lichtquelle emittierten Lichtes mit der Bildfolgesequenz synchronisiert unterbrochen wird. Um den Lichtwirkungsfaktor der Vorrichtung auf der Bildwand zu erhöhen, ist dabei vorgesehen, die Verschlusszeit der Shutter-Vorrichtung zu verkürzen und die Filmbewegung im nicht abgedeckten Bereich optisch zu kompensieren.

Der vorliegenden Erfindung liegt von daher das technische Problem zugrunde, dass im projizierten Bild Störeffekte auftreten können, wenn schnell aufeinanderfolgende periodische Veränderungen der Bildhelligkeiten auftreten. Diese Störeffekte stehen unmittelbar in Zusammenhang mit der Synchronisation der Belichtungsphasen des Bildes mit der Bildfolgefrequenz des Filmes und werden insbesondere durch eine ungenaue Justage der beispielsweise als Umlaufblende ausgestatteten Shutter-Vorrichtung in dem optischen Strahlengang der Vorrichtung hervorgerufen. Ferner liegt der Erfindung das Problem zugrunde, dass sich bei den bekannten Vorrichtungen zur großflächigen Projektion von bewegten Filmbildern, die als Shutter-Vorrichtung eine Umlaufblende aufweisen, aufgrund der räumlichen Ausdehnung der rotierenden Blendenflügel der Umlaufblende, der Prozess des Abdeckens des Lichtkegels durch die jeweiligen Blendenflügel in einer relativ langen Zeit vollzieht, so dass dadurch eine Leistungsschwächung in dem zur Beleuchtung der Filmbilder verwendeten Licht auftritt, was letztendlich zu einer Reduktion der Lichtleistung des Systems auf der Bildwand führt

Ausgehend von dieser Problemstellung liegt der vorliegenden Erfindung die Aufgabe zugrunde, eine Vorrichtung zur Großbildprojektion der eingangs genannten Art sowie ein entsprechendes Verfahren zur großflächigen Projektion von Filmbildern auf eine Bildwand mit einer Vorrichtung der eingangs genannten Art derart weiterzubilden, dass die aus dem Stand der Technik bekannten und obig diskutierten Probleme und Nachteile vermindert und insbesondere eine deutliche Steigerung der Lichtleistung des Systems erreicht werden kann.

Diese Aufgabe wird erfindungsgemäß durch eine Vorrichtung gemäß Anspruch 1 und eine Verfahren gemäß Anspruch 10 gelöst.

Die Vorteile der Erfindung liegen bezüglich der Vorrichtung insbesondere darin, dass auf eine besonders einfach zu realisierende Weise die Ausleuchtung eines Bildes auf der Bildwand optimiert wird. Der zwischen der Lichtquelle und der Bildprojektionsebene angeordnete Lichtleiter hat dabei eine Diffusorfunktion. Durch seine Anordnung innerhalb des Strahlenganges wird erreicht, dass die Querschnittsfläche des Lichtes, welches letztendlich durch die Bildprojektionsebene und durch das Objektiv dirigiert wird, in Bezug auf die Intensitätsverteilung besonders homogen ist. Dadurch wird eine homogene Ausleuchtung des auf der Bildwand projizierten Lichts erreicht. Im einzelnen läuft das von der Lichtquelle emittierte Licht nach dem Einkoppeln in den Lichtleiter aufgrund vielfacher Totalreflexionen im Lichtleiterinneren zum anderen Ende des Lichtleiters. Dabei geht die ursprüngliche Anordnung der Teilstrahlen des von der Lichtquelle anfänglich emittierten Lichts durch diese Mehrfachreflexion verloren. Dies bewirkt, dass die Intensitätsverteilung des am Lichtleiterende anschließend wieder ausgekoppelten Lichtes keinerlei Inhomogenitäten über die Querschnittsfläche aufweist. Durch eine geeignete Wahl des Lichtleitermaterials kann des weiteren die durch Absorption in dem Lichtleiter hervorgerufene Dämpfung der Lichtintensität vernachlässigbar gering gehalten werden. Der Begriff "Lichtquelle" sei hierbei in seiner allgemeinen Bedeutung zu interpretieren. Denkbar wäre beispielsweise als Lichtquelle eine handelsübliche Projektionslampe einzusetzen; die erfindungsgemäße Vorrichtung soll aber nicht auf diese Ausführungsform beschränkt sein. So kann beispielsweise auch eine punktförmige Lichtquelle oder eine Vielzahl von punktförmiger Lichtquellen verwendet werden, an die in unmittelbarer Nähe das Lichtleiterende der erfindungsgemäßen Vorrichtung zum Einkoppeln des von den punktförmigen Lichtquellen emittierte Lichtes angeordnet ist. Möglich wäre auch, eine Entladungslampe zu verwenden, wobei das Lichtleiterende der erfindungsgemäßen Vorrichtung unmittelbar in der Nähe der Funkenentladungsstrecke dieser Entladungslampe positioniert wird. Auch könnte das von der Lichtquelle emittierte Licht mittels einer weiteren Lichtleiteranordnung zunächst übertragen werden, wobei dann die Auskoppelseite dieser Lichtleiteranordnung - im Sinne der erfindungsgemäßen Vorrichtung - als punktförmige Lichtquelle verwendet wird. Der Vorteil hiervon läge insbesondere darin, dass die eigentliche Lichtquelle dann in einer nahezu beliebigen Entfernung von den restlichen Komponenten der Projektionsvorrichtung angeordnet und betrieben werden kann.

Die Vorteile der Erfindung liegen bezüglich der Vorrichtung des weiteren darin, dass eine Shutter-Vorrichtung verwendet wird, die den Strahlengang des von der Lichtquelle abgestrahlten Lichts mit der Bildfolgesequenz synchronisiert unterbricht, wobei diese Shutter-Vorrichtung im Strahlengang des Lichtes unmittelbar vor der Einkoppelposition des Lichtes in den Lichtleiter liegt. Die Shutter-Vorrichtung dient dazu, den Strahlengang während des Transports des Filmbildes in der Bildprojektionsebene abzudecken. Von daher ist die Shutter-Vorrichtung mit der Bildfolgefrequenz exakt synchronisiert. Dadurch, dass in der erfindungsgemäßen Vorrichtung vorgesehen ist, die Shutter-Vorrichtung im Strahlengang des Lichtes unmittelbar vor der Einkoppelposition kann auf besonders einfache Art und Weise eine leichte und dennoch genaue Justierung der Shutter-Vorrichtung in dem Strahlengang realisiert werden. Dadurch wird in vorteilhafter Weise das aus der Filmvorführtechnik bekannte Blendenziehen in dem auf der Bildwand projizierten Bild verhindert. Ferner ist es bei dieser erfindungsgemäßen Ausführungsform möglich, die Shutter-Vorrichtung bei einer Position im Strahlengang des Lichtes anzuordnen, wo die Querschnittsfläche des Lichtes möglichst klein wird. Damit erfolgt das synchronisierte Abdecken des Strahlengangs besonders schnell, da dann die Verschluss- bzw. Öffnungszeit der Shutter-Vorrichtung minimalisiert ist. Durch das besonders schnelle Abdecken des Strahlengangs können die in der Filmvorführtechnik bekannten Flicker- bzw. Flimmereffekte, d.h. der Wechsel von hellen und dunklen Flächen, in hoher Frequenz auf der Bildwand, vermindert werden. Somit werden stroboskopische Effekte bei den auf der Bildwand projizierten Bildern vollständig eliminiert. Des weiteren wird durch die schnelle Verschlusszeit letztendlich die gemittelte Intensität des auf die Bildwand projizierten Lichtes deutlich gesteigert. Ferner kann durch die erfindungsgemäße Anordnung der Shutter-Vorrichtung eine signifikante Verbesserung des Randabfalls in dem auf die Bildwand projiziertem Bild erreicht werden, was ebenso zu einer besseren Ausleuchtung des projizierten Bildes führt.

Mit dem erfindungsgemäßen Verfahren wird eine Möglichkeit angegeben, auf eine besonders effektive Art und Weise die Homogenität der Lichtintensitätsverteilung in dem Licht, welches durch die Bildprojektionsebene und durch das Objektiv dirigiert wird, zu optimieren. Hierbei wird das von der Lichtquelle emittierte Licht durch einen Lichtleiter, der im Strahlengang des von der Lichtquelle abgestrahlten Lichts zwischen der Lichtquelle und der Bildprojektionsebene liegt, eingekoppelt und an dessen Ende wieder ausgekoppelt. Die Vorteile der Erfindung liegen bezüglich des Verfahrens insbesondere darin, ein Unterbrechen des von der Lichtquelle emittierten Lichtes unmittelbar vor dem Einkoppeln des Lichtes in den Lichtleiter oder unmittelbar nach dem Auskoppeln des Lichtes aus dem Lichtleiter erfolgt, wobei das Unterbrechen mit der Bildfolgesequenz der in der Bildprojektionsebene durchlaufenden Filmbilder synchronisiert ist. Dadurch kann erreicht werden, dass der Vorgang des Unterbrechens in sehr kurzer Zeit erfolgt und dadurch solche Effekte, die durch lange Verschlusszeiten in den projizierten Bildern auf der Bildwand auftreten, deutlich vermindert werden.

Bevorzugte Weiterbildungen der Erfindung sind bezüglich der Vorrichtung in den Unteransprüchen 2 bis 9 und bezüglich des Verfahrens in den Unteransprüchen 11 bis 17 angegeben.

So ist für die Vorrichtung bevorzugt vorgesehen, dass die Lichtquelle eine Projektionslampe ist, die einen zum Lichtleiter konvergierenden Lichtkegel abstrahlt. Derartige Projektionslampen sind aus der Filmvorführtechnik bekannt und stellen wegen der hohen Lichtausbeute und der sehr guten Farbwiedergabeeigenschaften meistens eine Xenonhochdrucklampe dar. Außer einem Glaskolben, der unter einem hohen Druck von über 100 kPa mit dem Edelgas Xenon gefüllt ist, gehört zu einer Projektionslampe bekannterweise auch ein schalenförmiger Reflektor, in welchem der Glaskolben nach dessen optischer Achse ausgerichtet teilweise über den oberen Rand der Reflektorschale hinausragend aufgenommen ist. Dieser Reflektor reflektiert das vom Lichtbogen abgestrahlte Licht in einen (runden) Lichtkegel, wobei die Projektionslampe derart angeordnet ist, dass sie den Lichtkegel auf die Stirnseite des Lichtleiters im Strahlengang dirigiert, wo das Licht in den Lichtleiter eingekoppelt und an dessen anderen Stirnseite wieder ausgekoppelt wird. Der Vorteil der erfindungsgemäßen Anordnung bei dieser Ausführungsform liegt insbesondere darin, dass durch die mehrfachen Totalreflexionen insbesondere das üblicherweise im Kernbereich des von der Projektionslampe abgestrahlten Lichtkegels auftretende Intensitätsminimum vollständig eliminiert wird. Dieses Minimum im Lichtkegelkegel resultiert ursprünglich von der Abschirmung der Elektroden der Projektionslampe, da diese in Richtung der optischen Achse ausgerichtet sind. Durch den Einsatz des Lichtleiters zur Homogenisierung der Lichtintensität kann insbesondere darauf verzichtet werden, die Bildschärfe des auf die Bildwand projizierten Bildes zu reduzieren, um somit eine Verwischung des Intensitätsminimums im Kernbereich des Bildes zu bewirken.

In einer möglichen Realisierung der Erfindung ist vorgesehen, dass an der Einkoppelseite des Lichtleiters eine Einkoppeloptik angebracht ist, welche das Einkoppeln des von der Lichtquelle emittierten Lichtes in den Lichtleiter bewirkt. Derartige Einkoppeloptiken sind aus der Lichtleitertechnik bekannt und führen zu einer Optimierung des Einkopplungswirkungsgrades. Hierdurch kann in vorteilhafter Weise erreicht werden, dass das gesamte, ursprünglich von der Lichtquelle emittierte Licht nahezu verlustfrei in den Lichtleiter eingekoppelt wird. Die Einkoppeloptik kann dabei in der Stirnfläche des Lichtleiters integriert sein. So ist beispielsweise denkbar, die Stirnfläche des Lichtleiters linsenförmig zu gestalten, wobei diese Formgebung entsprechend der Konfiguration angepasst ist, um die Einkoppelung des Lichtes in den Lichtleiter zu optimieren. Selbstverständlich sind hier aber auch andere Ausführungsformen bei der Auslegung der Einkoppeloptik denkbar.

Besonders vorteilhaft bei einer Ausführungsform der erfindungsgemäßen Vorrichtung ist vorgesehen, dass eine Auskoppeloptik an der Auskoppelseite des Lichtleiters angeordnet ist, um das austretende Licht durch die Bildprojektionsebene und durch das Objektiv zu dirigieren. Durch die Auskoppeloptik kann in besonders einfacher und leicht zu realisierender Weise der Strahlengang des austretenden Lichtes der Anordnung Bildprojektionsebene - Objektiv angepasst werden, um dadurch mögliche Auskoppelverluste der Lichtintensität zu reduzieren bzw. gar vollständig zu eliminieren. Möglich wäre hierbei, die Auskoppeloptik in der Auskoppelfläche des Lichtleiters zu integrieren, indem beispielsweise als Formgebung der Auskoppelfläche eine Linsenform gewählt wird. Denkbar sind hier selbstverständlich aber auch andere Ausführungsformen.

Als Shutter-Vorrichtung wird bevorzugt eine aus der Filmvorführtechnik bekannte und vielfach bewährte rotierende Umlaufblende, insbesondere eine Mehrflügelblende, verwendet, die mit der Filmfolgesequenz synchronisiert rotiert. Der Vorteil dieser Ausführungsform liegt darin, dass die Umlaufblende im Vergleich zu herkömmlichen Großbildprojektoren wesentlich kleiner ausgeführt ist, da diese sich an einer Position unmittelbar vor dem Einkoppeln in den Lichtleiter bzw. unmittelbar nach dem Auskoppeln des Lichtes aus dem Lichtleiter befindet. An diesen Positionen liegt ein Minimum der Querschnittsfläche des Strahlenganges des Lichtes vor. Hierbei ist denkbar, eine Zwei- oder Drei-Flügelblende einzusetzen, bei denen das Verhältnis der Flügelbreite (Zeit der Abdeckung des Strahlenganges) zur Schaltzeit des Filmes entsprechend angepasst ist. In einer möglichen Ausführungsform ist vorgesehen, dass für die Flügelbreite ein kleinstmöglicher Wert gewählt wird, ohne dass in den projizierten Bildern auf der Bildwand ein Blendenziehen auftritt. Denkbar sind hier aber auch andere Konfigurationen und Ausführungsformen der Flügelblende.

In einer besonders vorteilhaften Ausführungsform wird als Shutter-Vorrichtung ein elektrooptischer Deflektor, insbesondere ein elektrooptischer Deflektor-Q-Switch, eingesetzt, wobei dieser mit der Bildfolgefrequenz getriggert wird. Derartige elektrooptische Deflektoren sind aus der Lasertechnik bekannt und zeichnen sich insbesondere durch die hohe Schaltgeschwindigkeit bei einer Repetitionsrate von bis zu mehreren kHz aus. Bei elektrooptischen Deflektoren wird durch Anlegen einer elektrischen Spannung ein linearer elektrischer Feldgradient über die Aperatur eines elektrooptischen Kristalls erzeugt. Da Deflektoren eine äußerst kompakte Abmessung aufweisen, kann durch den Einsatz von Deflektoren als Shutter-Vorrichtung in der Vorrichtung zur Großbildprojektion in vorteilhafter Weise die Baugröße bzw. Dimensionierung der gesamten Vorrichtung deutlich reduziert werden. Auch ist eine Justage von Deflektoren im Strahlengang besonders leicht durchzuführen und unproblematisch. Dadurch wird erreicht, dass zum einen die Flicker- bzw. Flimmereffekte eliminiert bzw. vollständig eliminiert werden und zum anderen die Dimensionierung der gesamten Vorrichtung deutlich reduziert wird.

In einer besonders vorteilhaften Realisierung ist vorgesehen, dass eine Filteranordnung, insbesondere eine IR-Filteranordnung, an der Einkoppelseite des Lichtleiters angeordnet ist. Beispielsweise wäre denkbar, diese Filteranordnung direkt in der Einkoppelfläche des Lichtleiters zu integrieren, was beispielsweise durch eine geeignete Beschichtung dieser Einkoppelfläche möglich ist. Eine Filteranordnung in dem Strahlengang eines Bildprojektors ist aus dem Stand der Technik bekannt und dient insbesondere zur Anpassung der spektralen Verteilung des von der Lichtquelle emittierten Lichtes. Dadurch, dass die Filteranordnung als Beschichtung auf der Einkoppelseite des Lichtleiters bzw. als Miniaturausführung unmittelbar vor der Einkoppelfläche des Lichtleiters ausgeführt werden kann, ist eine deutliche Reduzierung der Dimensionierung der erfindungsgemäßen Vorrichtung zur Großbildprojektion möglich.

Als vorteilhafte Weiterbildung ist ferner vorgesehen, dass an der Einkoppelseite des Lichtleiters eine Bildklappe angeordnet ist, um bei Bedarf den Strahlengang des Lichtes zu unterbrechen. Dieses ist erforderlich, um beispielsweise einen Film in die Vorrichtung zur Großbildprojektion einzulegen. Dadurch, dass die Bildklappe unmittelbar vor der Einkoppelseite des Lichtleiters positioniert werden kann, ist es möglich, eine Bildklappe mit relativ kleinem Querschnitt einzusetzen, da an diesen Positionen der Strahlquerschnitt in der Nähe bzw. in seinem Minimum vorliegt. Dadurch kann in vorteilhafter Weise erreicht werden, dass die Dimensionierung der gesamten Vorrichtung zur Großbildprojektion deutlich reduziert wird. Denkbar ist des weiteren, die Bildklappe mit der Shutter-Vorrichtung zu kombinieren. Wenn als Shutter-Vorrichtung beispielsweise ein elektrooptischer Deflektor eingesetzt wird, so kann dieser neben der mit der Bildfolgefrequenz synchronisierten Unterbrechung auch die dauerhafte Unterbrechung des Strahlengangs übernehmen. In dem Fall, wenn als Shutter-Vorrichtung eine rotierende Umlaufblende verwendet wird, wäre es denkbar, dass die Umlaufblende die Aufgabe der Bildklappe übernimmt, wozu die Position der einzelnen Flügel in bezug auf den Strahlengang bekannt und einstellbar sein muß. Selbstverständlich sind hier aber auch andere Ausführungsformen denkbar.

Besonders vorteilhaft ist es, dass der Lichtleiterquerschnitt in einer Ausführungsform an der Auskoppelseite des Lichtleiters eine rechteckige, insbesondere an die Formgebung des in der Bildprojektionsebene angeordneten Filmbildes angepasste Geometrie, aufweist. Hierdurch kann auf besonders einfache Weise erreicht werden, dass das ausgekoppelte Licht bereits im Querschnitt genau die zur Beleuchtung des Filmbildes in der Bildprojektionsebene erforderliche Fläche aufweist, so dass dadurch der Einsatz von zusätzlichen Blenden entfällt, welche das über den zu beleuchtenden Bereich des Filmbildes verlaufende Licht abblockt. Als Vorteil hierbei ist, dass sämtliches Licht, welches zuvor in den Lichtleiter eingekoppelt wurde, letztendlich auch zur Beleuchtung des Filmbildes verwendet wird und kein Intensitätsverlust mehr durch den Einsatz von Blenden bzw. anderen formgebenden optischen Komponenten auftritt. Selbstverständlich sind hier aber auch andere Formgebungen des Lichtleiters denkbar.

Als vorteilhafte Weiterbildung zum erfindungsgemäßen Verfahren ist vorgesehen, dass das von der Lichtquelle emittierte Licht zu einem Lichtkegel konvergiert wird. Dadurch kann in besonders vorteilhafter Weise erreicht werden, dass die Lichtausbeute des von der Lichtquelle emittierten Lichtes optimiert wird. Dies wird dadurch erreicht, dass die einzelnen Lichtstrahlen, beispielsweise mittels eines Reflektors, zu einem Gesamtstrahl gebündelt und dann in den Lichtleiter eingekoppelt werden. Der Gesamtstrahl kann dabei eine Kegelform aufweisen. Denkbar wären hierbei aber auch andere Strahlgeometrien.

In einer möglichen Realisierung des erfindungsgemäßen Verfahrens ist vorgesehen, dass das Einkoppeln des Lichtes in den Lichtleiter mittels einer Einkoppeloptik erfolgt. Dadurch ist eine besonders einfach zu realisierende Möglichkeit gegeben, mit der die Einkopplung mit besonders hohem Wirkungsgrad umsetzbar ist. Dies hat zur Folge, dass problemlos im Idealfall das gesamte, ursprünglich von der Lichtquelle emittierte Licht in den Lichtleiter gelangt. Denkbar sind jedoch auch andere Verfahrensschritte zum Einkoppeln des Lichtes.

Besonders vorteilhaft ist bei einer Weiterbildung des erfindungsgemäßen Verfahrens vorgesehen, den Verfahrensschritt des Auskoppelns des Lichtes aus dem Ende des Lichtleiters mittels einer Auskoppeloptik zu bewirken. Hierdurch kann in besonders einfacher und leicht zu realisierender Weise der Strahlengang des austretenden Lichtes der Anordnung Bildprojektionsebene - Objektiv angepasst werden, um dadurch mögliche Auskoppelverluste der Lichtintensität zu reduzieren bzw. gar vollständig zu eliminieren.

In einer möglichen Ausführungsform des erfindungsgemäßen Verfahrens ist vorgesehen, dass der Verfahrensschritt des Unterbrechens mittels einer mit der Bildfolgesequenz synchronisierten Mehrflügelblende erfolgt. Dadurch kann auf ein aus dem Stand der Technik bekanntes Verfahren zurückgegriffen werden, was in vorteilhafter Weise die Umsetzung des erfindungsgemäßen Verfahrens wesentlich vereinfacht.

Bei einer speziellen Ausführung des erfindungsgemäßen Verfahrens ist vorgesehen, dass das Unterbrechen mittels eines über die Bildfolgesequenz getriggerten elektooptischen Deflektors erfolgt. Dadurch wird erreicht, dass die Synchronisation der Unterbrechung mit der Bildfolgesequenz auf besonders einfache Weise gesteuert werden kann. Ferner ist denkbar, dass auch eine Unterbrechung des Strahlengangs für eine längere Zeit somit durchführbar ist. Dies wäre beispielsweise dann notwendig, wenn ein Film eingelegt werden muss. Selbstverständlich sind hier aber auch andere Verfahrensschritte zur Unterbrechung des Strahlenganges denkbar.

In besonders vorteilhafter Weise ist eine Filterung des von der Lichtquelle emittierten Lichtes mittels einer Filteranordnung, insbesondere einer IR-Filteranordnung, vor dem Einkoppeln des Lichtes in den Lichtleiter vorgesehen. Dadurch wird erreicht, dass in den Lichtleiter nur Licht solcher Frequenz eintritt, das letztendlich zur Projektion der Filmbilder auf der Bildwand verwendet wird. Dadurch wird eine farbgetreue Wiedergabe der projizierten Filmbilder sichergestellt.

Zum Unterbrechen des Strahlenganges des von der Lichtquelle emittierten Lichtes ist vorgesehen, eine Bildklappe einzusetzen, wobei das Unterbrechen unmittelbar vor dem Einkoppeln des Lichtes in den Lichtleiter oder unmittelbar nach dem Auskoppeln des Lichtes aus dem Lichtleiter erfolgt. Dadurch kann erreicht werden, dass bei Bedarf die Projektion des Lichtes unterbrochen wird, um beispielsweise Arbeiten an der Bildprojektionsebene oder am Objektiv durchzuführen.

Im folgenden wird ein bevorzugtes Ausführungsbeispiel der Erfindung anhand der Zeichnungen näher erläutert.

Es zeigen:
- Fig. 1: eine Vorrichtung zur Großbildprojektion gemäß dem Stand der Technik; und
- Fig. 2: eine Vorrichtung zur Großbildprojektion gemäß der vorliegenden Erfindung, im Schnitt.

Die Vorrichtung zur Großbildprojektion gemäß dem Stand der Technik wurde bereits in der Einleitung erläutert. Sie enthält eine Projektionslampe 1, in Form einer handelsüblichen Xenonhochdrucklampe, die aus einer Lichtquelle 17 und einem Reflektor 16 aufgebaut ist und einen Lichtkegel 4 erzeugt. Dieser Lichtkegel 4 wird durch einen IR-Filter 12 und danach durch eine Bildprojektionsebene 2 und ein Objektiv 3 dirigiert. In der aus dem Stand der Technik bekannten Vorrichtung befindet sich vor der Bildprojektionsebene 2 eine Umlaufblende 6, welche in dem Lichtkegel 4 angeordnet ist. Die Umlaufblende 6 rotiert, wobei die Rotationsgeschwindigkeit mit der Bildfolgesequenz des in der Bildprojektionsebene 2 eingelegten Filmes synchronisiert ist, wodurch der Lichtkegel 4 immer dann abgedeckt wird, wenn die einzelnen Filmbilder in der Bildprojektionsebene 2 wechseln. Des weiteren ist eine Bildklappe 13 in dem Strahlengang des Lichtes vorgesehen. Die Bildklappe ermöglicht es, dass der von der Projektionslampe 1 emittierte Lichtkegel 4 bei Bedarf dauerhaft abgedeckt wird, dieses ist beispielsweise dann notwendig, wenn ein Film eingelegt bzw. gewechselt werden muß. Durch die notwendige Anordnung der Umlaufblende 6 und des IR-Filters 12 zwischen der Bildprojektionsebene 2 und der Projektionslampe 1 ist es erforderlich, relativ großdimensionierte Bauteile einzusetzen, da der Lichtkegel 4 an den jeweiligen Positionen dieser Komponenten noch verhältnismäßig groß aufgeweitet ist. Dies hat zur Folge, dass die Umlaufblende relativ große Flügel aufweisen muß, um damit den gesamten Strahlengang abdecken zu können. Die großdimensionierte Umlaufblende 6 ist jedoch relativ schwierig zu justieren, so dass Flicker- und Flimmereffekte auf dem auf eine Bildwand 15 projiziertes Bild auftreten. Diese Effekte resultieren aufgrund einer ungenauen Justage der Umlaufblende 6 in dem Strahlengang. Ferner ist die Verschlusszeit, mit welcher der Strahlengang in Synchronisation mit der Bildfolgesequenz durch die Umlaufblende 6 abgedeckt wird, relativ lang, so dass letztendlich auf dem projizierten Bild Intensitätsverluste auftreten.

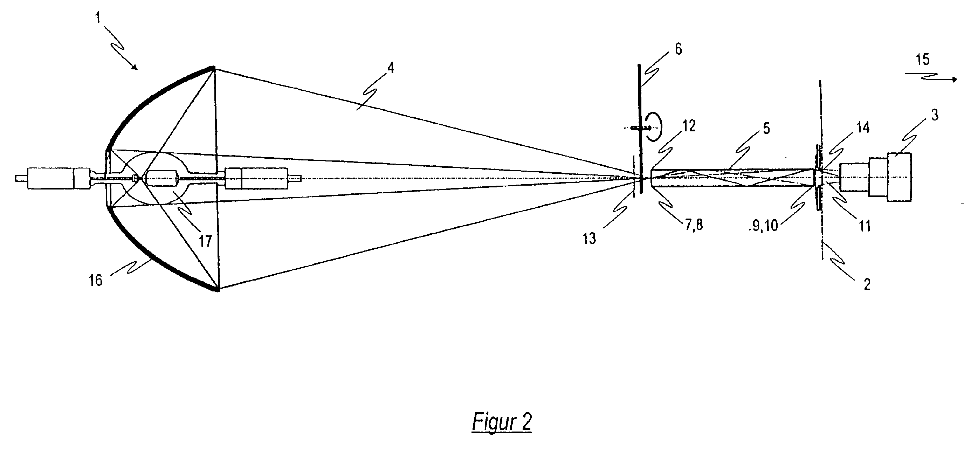

Figur 2 zeigt eine erfindungsgemäße Vorrichtung zur Großbildprojektion im Schnitt. Die gesamte dargestellte Vorrichtung enthält im wesentlichen eine aus einem Reflektor 16 und einer Lichtquelle 17 aufgebaute Projektionslampe 1, eine Bildprojektionsebene 2 und ein Objekt 5, wobei die Projektionslampe 1 einen Lichtkegel 4 durch die Projektionsebene 2 und durch das Objektiv 3 dirigiert. Erfindungsgemäß ist des weiteren ein Lichtleiter 5 in der Gestalt eines Lichtstabes unmittelbar vor der Bildprojektionsebene 2 vorgesehen. Der Lichtleiter 5 weist an der Einkoppelseite 8 eine Einkoppeloptik 7 (nicht explizit dargestellt) auf, die in dieser Ausführungsform mit der Einkoppelfläche 8 integriert ist. Dieses gelingt durch eine linsenförmige Formgebung der Einkoppelfläche 8 des Lichtleiters 5. Dadurch kann erreicht werden, dass der von der Projektionslampe 1 erzeugte Lichtkegel 4 nahezu verlustfrei in den Lichtleiter 5 eingekoppelt wird. Das eingekoppelte Licht wird in dem Lichtleiter 5 durch mehrfache Totalreflexion zu der Auskoppelseite 10 des Lichtleiters 5 übertragen. Hierbei wird ein Diffusoreffekt erzeugt, durch den Intensitätsinhomogenitäten in dem Lichtkegel 4 eliminiert werden. Das über den Lichtleiter 5 übermittelte Licht wird an der Auskoppelseite des Lichtleiter 5 ausgekoppelt. In Analogie zu der Einkoppelseite 8 befindet sich auch hier eine Optik 9 (nicht explizit dargestellt), welche in der Auskoppelfläche 8 des Lichtleiters 5 integriert ist. Mittels der Auskoppeloptik 9 wird eine nahezu verlustfreie Auskoppelung des Lichtes aus dem Lichtleiter 5 erreicht. Das ausgekoppelte Licht wird anschließend durch die Bildprojektionsebene 2 dirigiert, in welcher ein Filmbild 14 vorliegt. Über das nachfolgende Objektiv 3 wird dann das Filmbild 14 auf einer Bildwand 15 (nicht explizit dargestellt) projiziert.

Besonders vorteilhaft an der in Figur 2 gezeigten Darstellung ist, dass durch die Verwendung des Lichtleiters 5 die Shutter-Vorrichtung 6 unmittelbar an die Einkoppelfläche 8 des Lichtleiters 5 angrenzen kann. Dadurch kann erreicht werden, dass die Dimensionierung der Shutter-Vorrichtung 6, welche in der in Figur 2 dargestellten Ausführungsform eine rotierende Umlaufblende ist, deutlich reduziert ist im Vergleich zu einer aus dem Stand der Technik bekannten Vorrichtung. Das gleiche gilt für die Bildklappe 13, welche entweder in dem Bereich vor der Einkoppelseite 8 des Lichtleiters 5 oder hinter der Auskoppelseite 10 des Lichtleiters 5 und vor der Bildprojektionsebene 2 angeordnet ist. Diese kleinere Ausführungsform der Bildklappe 13 der Shutter-Vorrichtung 6 gestattet es, dass zum einen die gesamte Dimensionierung der erfindungsgemäßen Vorrichtung zur Großbildprojektion wesentlich kleiner ausfallen kann als bei einer ähnlichen Vorrichtung aus dem Stand der Technik, und zum anderen dass die Verschlusszeit der Shutter-Vorrichtung deutlich gesteigert werden kann, wodurch Flickereffekte vermindert und der Randabfall der Intensität bei projizierten Filmbildern 14 auf der Bildwand 15 signifikant verbessert werden kann.

In der erfindungsgemäßen Vorrichtung ist ferner vorgesehen, dass die Einkoppelseite 8 des Lichtleiters 5 eine IR-Beschichtung aufweist, wodurch eine separate IR-Filteranordnung 12 nicht mehr erforderlich ist. Der Einsatz des Lichtleiters 5 führt nicht nur zu einer homogenen Intensitätsverteilung in dem zur Beleuchtung des Filmbildes 14 eingesetzten Lichtes, sondern es werden auch durch den Diffusoreffekt mechanische Beschädigungen im Filmbild 14 (Kratzer) weniger deutlich durch das optische System abgebildet. Der Einsatz des Lichtleiters 5 hat des weiteren zur Folge, dass letztendlich das in der Bildprojektionsebene 2 angeordnete Filmbild 14 mit nahezu einer punktförmigen Lichtquelle beleuchtet wird, wodurch Linsenfehler, welche durch das hintergeschaltete Objektiv 3 ansonsten auftreten würden, nahezu vollständig eliminiert werden. Insbesondere kann das aus der Filmvorführtechnik bekannte Blendenziehen durch die punktförmige Lichtquelle nahezu eliminiert werden.

Für den Lichtleiter 5 sind verschiedene geometrische Formen denkbar. Beispielsweise könnte ein Lichtleiter eingesetzt werden, dessen Auskoppelfläche 10 rechteckig ist und dem Format des in der Bildprojektionsebene 2 angeordneten Filmbildes 14 entsprechend angepasst ist. Dadurch kann erreicht werden, dass auf eine notwendige Abblendung von Teillicht, welches Licht auf das Filmbild 14 in der Bildprojektionsebene 2 auftritt, notwendig wird. Insbesondere wird durch diese spezielle Formgebung des Lichtleiters 5 sämtliches Licht zur Beleuchtung bzw. Ausleuchtung des Filmbildes 14 verwendet, wodurch letztendlich eine deutliche Steigerung der Lichtleistung des gesamten Systems zur Großbildprojektion erreicht werden kann.

### Bezugszeichenliste

- 1: Projektionslampe
- 2: Bildprojektionsebene
- 3: Objektiv
- 4: Lichtkegel
- 5: Lichtleiter
- 6: Shutter-Vorrichtung
- 7: Einkoppeloptik
- 8: Einkoppelfläche
- 9: Auskoppeloptik
- 10: Auskoppelfläche
- 11: austretendes Licht
- 12: Filteranordnung
- 13: Bildklappe
- 14: Filmbilder
- 15: Bildwand
- 16: Reflektor
- 17: Lichtquelle

## Patentansprüche

1. Vorrichtung zur großflächigen Projektion von Filmbildern (14) auf eine Bildwand (15), mit einer Lichtquelle (1) und einem Reflektor (16) zum Erzeugen eines Lichtkegels und zum Projizieren des von der Lichtquelle (1) emittierten Lichts durch eine Bildprojektionsebene (2) und ein Objektiv (3) auf die Bildwand (15) und mit einer Shutter-Vorrichtung (6), die den Strahlengang des von der Lichtquelle (1) emittierten Lichts mit der Bildfolgesequenz synchronisiert unterbricht, mit
einem im Strahlengang des von der Lichtquelle (1) emittierten Lichts zwischen der Lichtquelle (1) und der Bildprojektionsebene (2) angeordneten Lichtleiter (5), in welchen das Licht eingekoppelt und an dessen Ende wieder ausgekoppelt wird, wobei die Shutter-Vorrichtung (6) in dem Strahlengang des Lichtes unmittelbar vor der Einkoppelposition des Lichtes in den Lichtleiter (5) liegt,
**dadurch gekennzeichnet, dass**
die Shutter-Vorrichtung (6) in einem Minimum des Querschnitts des Lichtkegels vorliegt.

2. Vorrichtung nach Anspruch nach Anspruch 1,
wobei die Lichtquelle (1) eine Projektionslampe ist, die einen zum Lichtleiter (5) konvergierenden Lichtkegel (4) abstrahlt.

3. Vorrichtung nach Anspruch 1 oder 2,
mit einer Einkoppeloptik (7) an der Einkoppelseite (8) des Lichtleiters (5) zum Einkoppeln des Lichtkegels (4) in den Lichtleiter (5).

4. Vorrichtung nach einem der vorherigen Ansprüche,
mit einer Auskoppeloptik (9) an der Auskoppelseite (10) des Lichtleiters (5) zum Dirigieren des austretenden Lichtekegels (11) **durch** die Projektionsebene (2) und **durch** das Objektiv (3).

5. Vorrichtung nach einem der vorherigen Ansprüche,
wobei die Shutter-Vorrichtung (6) eine mit der Bildfolgesequenz synchronisiert rotierende Umlaufblende, insbesondere eine Mehrflügelblende, aufweist.

6. Vorrichtung nach einem der vorherigen Ansprüche,
wobei die Shutter-Vorrichtung (6) einen über die Bildfolgesequenz getriggerten, elektrooptischen Deflektor, insbesondere einen elektrooptischen Deflektor-Q-Switch, aufweist.

7. Vorrichtung nach einem der vorherigen Ansprüche,
mit einer Filteranordnung (12), insbesondere einer IR-Filteranordnung, welche im Strahlengang des Lichtes vor der Einkoppelposition des Lichtes in den Lichtleiter (5) angeordnet ist.

8. Vorrichtung nach einem der vorherigen Ansprüche, mit einer Bildklappe (13), die den Strahlengang des von der Lichtquelle (1) emittierten Lichts bei Bedarf unterbricht, wobei die Bildklappe (13) im Strahlengang des Lichtes unmittelbar vor der Einkoppelposition des Lichtes in den Lichtleiter (5) oder unmittelbar hinter der Auskoppelposition des Lichtes aus dem Lichtleiter (5) liegt.

9. Vorrichtung nach einem der vorherigen Ansprüche,
wobei der Querschnitt des Lichtleiters (5) an dessen Auskoppelseite (10) eine rechteckige Geometrie, insbesondere eine an die Form eines in der Bildprojektionsebene (3) angeordneten Filmbildes (14) angepasste Geometrie, aufweist.

10. Verfahren zur großflächigen Projektion von Filmbildern (14) auf eine Bildwand (15), mit folgenden Verfahrensschritten:
a) Emittieren von Licht aus einer Lichtquelle (1);
b) Erzeugen eines Lichtkegels mit einem Reflektor (16);
c) Einkoppeln des emittierten Lichtes in einen Lichtleiter (5);
d) Auskoppeln des Lichtes aus dem Ende des Lichtleiters (5); und
e) Projizieren des ausgekoppelten Lichtes durch eine Bildprojektionsebene (2) und ein Objektiv (3) auf die Bildwand (15),
wobei unmittelbar vor dem Einkoppeln des Lichtes in den Lichtleiter (5) das von der Lichtquelle (1) emittierte Licht an der Position mit der Bildfolgesequenz synchronisiert unterbrochen wird, an welcher der Querschnitt des Lichtkegels in einem Minimum vorliegt.

11. Verfahren nach Anspruch 10, mit ferner folgendem Verfahrensschritt nach Verfahrensschritt a):
a1) Konvergieren des von der Lichtquelle (1) emittierten Lichtes zu einem Lichtkegel (4).

12. Verfahren nach Anspruch 10 oder 11,
wobei das Einkoppeln des Lichtes in den Lichtleiter (5) mittels einer Einkoppeloptik (7) erfolgt.

13. Verfahren nach einem der Ansprüche 10 bis 12,
das Auskoppeln des Lichtes aus dem Ende des Lichtleiters (5) mittels einer Auskoppeloptik (9) erfolgt.

14. Verfahren nach einem der Ansprüche 10 bis 13,
das Unterbrechen des Strahlenganges mittels einer rotierenden Umlaufblende, insbesondere eine Mehrflügelblende, erfolgt, wobei die Rotationsfrequenz dieser mit der Bildfolgesequenz synchronisiert ist.

15. Verfahren nach einem der Ansprüche 10 bis 13,
das Unterbrechen des Strahlenganges mittels eines elektrooptischen Deflektors, insbesondere ein elektrooptischer Deflektor-Q-Switch, erfolgt, wobei der Deflektor über die Bildfolgesequenz getriggert wird.

16. Verfahren nach einem der Ansprüche 10 bis 15, mit ferner folgendem Verfahrensschritt vor Verfahrensschritt b):
b0) Filterung des von der Lichtquelle (1) emittierten Lichtes mittels einer Filteranordnung (12), insbesondere eine IR-Filteranordnung.

17. Verfahren nach einem der Ansprüche 10 bis 16, ferner mit dem Verfahrensschritt des Unterbrechens des Strahlenganges des von der Lichtquelle (1) emittierten Lichts unmittelbar vor dem Einkoppeln des Lichtes in den Lichtleiter (5) oder unmittelbar nach dem Auskoppeln des Lichtes aus dem Lichtleiter (5) mittels einer Bildklappe (13).

## Claims

1. Device for large-scale projection of film images (14) onto a screen (15), with a light source (1) and a reflector (16) to generate a cone of light and to project the light emitted from the light source (1) through a projection plane (2) and a lens (3) onto the screen (15), and with a shutter device (6) which interrupts the optical path of the light emitted by the light source (1) in synchronisation with the sequence of images, with
a light guide (5) situated in the optical path of the light emitted by the light source (1) between the light source (1) and the projection plane (2), into which the light is coupled and from the end of which the light is coupled out, whereby the shutter mechanism (6) is situated directly in front of the final point at which the light is coupled into the light guide (5),
**characterised in that**
the shutter mechanism (6) is located in a minimum of the cross-section of the cone of light.

2. Device according to Claim 1,
whereby the light source (1) is a projection lamp which emits a cone of light (4) converging towards the light guide (5).

3. Device according to Claim 1 or 2,
with coupling optics (7) at the coupling-in side (8) of the light guide (5) to couple in the cone of light (4) into the light guide (5).

4. Device according to any of the foregoing Claims,
with coupling optics (9) at the coupling-out side (10) of the light guide (5), to direct the emergent cone of light (11) through the projection plane (2) and the lens (3).

5. Device according to any of the foregoing Claims,
whereby the shutter mechanism (6) has a rotating disc shutter, particularly a multi-blade shutter, synchronised with the sequence of images.

6. Device according to any of the foregoing Claims,
whereby the shutter mechanism (6) has an electro-optic deflector, in particular an electro-optic deflector Q-switch, triggered via the sequence of images.

7. Device according to any of the foregoing Claims,
with a filter arrangement (12), in particular an IR filter arrangement, situated in the optical path of the light before the point at which the light is coupled into the light guide (5).

8. Device according to any of the foregoing Claims,
with a douser (13) which, when required, interrupts the optical path of the light emitted from the light source (1), whereby the douser (13) is situated in the optical path of the light immediately before the point at which the light is coupled into the light guide or immediately behind the point at which the light is coupled out from the light guide (5).

9. Device according to any of the foregoing Claims,
whereby the cross-section of the light guide (5) at its coupling-out side (10) has a right-angled geometry, in particular a geometry which matches the shape of a film image in the projection plane (3).

10. Procedure for large-scale projection of film images (14) onto a screen (15), with the following operational sequence:
a) Light is emitted from a light source (1);
b) A cone of light is generated with a reflector (16);
c) The emitted light is coupled into a light guide (5);
d) The light is coupled out of the end of the light guide (5); and
e) The light coupled out of the light guide is projected onto the screen (15) through an image projection plane (2) and a lens (3),
whereby immediately before the light is coupled into the light guide (5), the light emitted from the light source (1) is interrupted, in synchronisation with the sequence of images, at the point where the cross-section of the cone of light is at its minimum.

11. Procedure according to Claim 10, with additionally the following procedural step after step a):
a1) The light emitted by the light source (1) converges to form a cone of light (4).

12. Procedure according to Claim 10 or 11,
whereby the light is coupled into the light guide (5) by means of coupling optics (7).

13. Procedure according to any of Claims 10 to 12,
whereby the light is coupled out from the end of the light guide (5) by means of coupling-out optics (9).

14. Procedure according to any of Claims 10 to 13,
whereby the optical path is interrupted by means of a rotating-disc shutter, in particular a multi-blade shutter, and whereby the rotation frequency of the shutter is synchronised with the sequence of film frames.

15. Procedure according to any of Claims 10 to 13,
whereby the optical path is interrupted by means of an electro-optic deflector, in particular an electro-optic deflector Q-switch, and whereby the deflector is triggered by the sequence of film frames.

16. Procedure according to any of Claims 10 to 15, with the following additional procedural step before step b):
b0) The light emitted from the light source (1) is filtered by means of a filter arrangement (12), in particular an IR filter arrangement.

17. Procedure according to any of Claims 10 to 16, additionally with a procedural step whereby the optical path of the light emitted from the light source (1) is interrupted by means of a douser (13) immediately before the light is coupled into the light guide (5) or immediately after the light is coupled out from the light guide (5).

## Revendications

1. Appareil pour la projection à grande surface d'images de films (14) sur un écran (15), comprenant une source de lumière (1) et un réflecteur (16) pour produire un cône lumineux et pour projeter la lumière émise par la source de lumière (1) à travers un plan de projection image (2) et un objectif (3) sur l'écran (15), et comprenant un dispositif obturateur (6) qui interrompt le trajet des rayons de la lumière émise par la source de lumière (1) de façon synchronisée avec la séquence de succession d'images, comprenant un guide de lumière (5) agencé entre la source de lumière (1) et le plan de projection image (2) dans le trajet des rayons émis par la source de lumière (1), guide de lumière dans lequel la lumière est injectée et de nouveau sortie à son extrémité, ledit dispositif obturateur (6) étant disposé dans le trajet des rayons de la lumière immédiatement avant la position d'injection de la lumière dans le guide de lumière (5),
**caractérisé en ce que** le dispositif obturateur (6) est présent à un minimum de la section du cône lumineux.

2. Appareil selon la revendication 1, dans lequel la source de lumière (1) est une lampe de projection qui émet un cône de lumière (4) convergeant vers le guide de lumière (5).

3. Appareil selon la revendication 1 ou 2, comprenant une optique d'injection (7) au niveau du côté d'injection (8) du guide de lumière (5) pour injecter le cône lumineux (4) dans le guide de lumière (5).

4. Appareil selon l'une des revendications précédentes, comprenant une optique de sortie (9) au niveau du côté de sortie (10) du guide de lumière (5) pour diriger le cône lumineux sortant (11) à travers le plan de projection (2) et à travers l'objectif (3).

5. Appareil selon l'une des revendications précédentes, dans lequel le dispositif obturateur (6) comprend un obturateur rotatif synchronisé avec la séquence de succession d'images, en particulier un obturateur à pales multiples.

6. Appareil selon l'une des revendications précédentes, dans lequel le dispositif obturateur (6) comprend un déflecteur électro-optique déclenché par la séquence de succession d'images, en particulier un déflecteur électro-optique du type Q-Switch.

7. Appareil selon l'une des revendications précédentes, comprenant un agencement à filtre (12), en particulier un agencement à filtre infrarouge qui est agencé dans le trajet des rayons de la lumière avant la position d'injection de la lumière dans le guide de lumière (5).

8. Appareil selon l'une des revendications précédentes, comprenant un volet image (13) qui interrompt en cas de besoin le trajet des rayons de la lumière émise par la source de lumière (1), et dans lequel le volet image (13) est situé dans le trajet des rayons de la lumière immédiatement avant la position d'injection de la lumière dans le guide de lumière (5) ou immédiatement derrière la position de sortie de la lumière hors du guide de lumière (5).

9. Appareil selon l'une des revendications précédentes, dans lequel la section du guide de lumière (5) au niveau de son côté de sortie (10) présente une géométrie rectangulaire, en particulier une géométrie adaptée à la forme d'une image de film (14) disposée dans le plan de projection image (3).

10. Procédé pour la projection à grande surface d'images de films (14) sur un écran (15), comprenant les étapes de procédé suivantes :
a) émission de lumière depuis une source de lumière (1) ;
b) génération d'un cône lumineux avec un réflecteur (16) ;
c) injection de la lumière émise dans un guide de lumière (5) ;
d) sortie de la lumière hors de l'extrémité du guide de lumière (5) ; et
e) projection de la lumière sortie à travers un plan de projection image (2) et un objectif (3) sur l'écran (15),
dans lequel, immédiatement avant l'injection de la lumière dans le guide de lumière (5), la lumière émise par la source de lumière (1) est interrompue de manière synchronisée avec la séquence de succession d'images à la position à laquelle la section de cône lumineux présente un minimum.

11. Procédé selon la revendication 10, comprenant en outre l'étape de procédé suivante, après l'étape de procédé a) :
a1) convergence de la lumière émise par la source de lumière (1) en un cône lumineux (4).

12. Procédé selon la revendication 10 ou 11, dans lequel l'injection de la lumière dans le guide de lumière (5) a lieu au moyen d'une optique d'injection (7).

13. Procédé selon l'une des revendications 10 à 12, dans lequel la sortie de la lumière hors de l'extrémité du guide de lumière (5) a lieu au moyen d'une optique de sortie (9).

14. Procédé selon l'une des revendications 10 à 13, dans lequel l'interruption du trajet des rayons a lieu au moyen d'un diaphragme en rotation, en particulier un diaphragme à pales multiples, et dans lequel la fréquence de rotation du diaphragme et synchronisée avec la séquence de succession d'images.

15. Procédé selon l'une des revendications 10 à 13, dans lequel l'interruption du trajet des rayons a lieu au moyen d'un déflecteur électro-optique, en particulier un déflecteur électro-optique du type Q-Switch, et dans lequel le déflecteur est déclenché au moyen de la séquence de succession d'images.

16. Procédé selon l'une des revendications 10 à 15, comprenant en outre l'étape de procédé suivante avant l'étape de procédé b) :
b0) filtrage de la lumière émise par la source lumineuse (1) au moyen d'un agencement à filtre (12), en particulier d'un agencement à filtre infrarouge.

17. Procédé selon l'une des revendications 10 à 16, comprenant en outre l'étape de procédé consistant à interrompre le trajet des rayons de la lumière émise par la source de lumière (1) immédiatement avant l'injection de la lumière dans le guide de lumière (5) ou immédiatement après la sortie de la lumière hors du guide de lumière (5), au moyen d'un volet image (13).
